# EUROPÄISCHE PATENTSCHRIFT

(11) **EP 0 476 283 B1**
(45) Veröffentlichungstag und Bekanntmachung des Hinweises auf die Patenterteilung: **07.02.1996**
(21) Anmeldenummer: 91112909.6
(22) Anmeldetag: 31.07.1991
(51) Int. Cl.: G07F 7/10

(54) **Verfahren zur Verschleierung einer Eingabe bei einem Tastatureingabegerät für sicherheitsrelevante Daten**
Keyboard using secret coding process for protected data input
Procédé de masquage de donnée à l'aide d'un clavier pour des données de sécurité

(30) Priorität: 17.09.1990 EP 90117872
(43) Veröffentlichungstag der Anmeldung: 25.03.1992
(73) Patentinhaber: Siemens Nixdorf Informationssysteme Aktiengesellschaft, D-33102 Paderborn (DE)
(72) Erfinder: Ehmer, Christian, W-8000 München 90 (DE); Erdmenger, Stefan, Dipl.-Ing. (FH), W-8900 Augsburg (DE); Brücklmayr, Franz-Josef, Dipl.-Ing. (FH), W-8901 Königsbrunn (DE); Hewel, Harald, Dipl.-Ing., W-8890 Aichach (DE)
(74) Vertreter: Fuchs, Franz-Josef, Dr.-Ing.

(56) Entgegenhaltungen:
- EP-A- 0 248 712
- EP-A- 0 368 520
- GB-A- 2 190 775

## Beschreibung

Die Erfindung betrifft ein Verfahren zur Verschleierung einer Eingabe bei einem Tastatureingabegerät für sicherheitsrelevante Daten nach dem Oberbegriff des Patentanspruchs 1.

Ein Tastatureingabegerät für sicherheitsrelevante Daten ist aus der Siemens-Dokumentationsschrift OCO6SB März 1990 "Setzen Sie nicht nur auf eine Karte", bekannt. Das bekannte Tastatureingabegerät weist bereits eine gute Auslesesicherheit auf. Trotzdem sind Fälle bekannt geworden, in denen in Schädigungsabsicht ein Mitlesen der PIN (Persönliche Identifikations Nummer) erfolgte.

Dieses Mitlesen ist in den üblicherweise verwendeten Tastaturmatrizen verhältnismäßig einfach zu bewerkstelligen. Bei zwei bekannten Varianten von Matrixleitungen wird beispielsweise eine Tastenbetätigung dadurch erkannt, daß auf einer Steuerleitung ein kurzzeitiger binärer Pegelwechsel stattfindet, der im Falle einer gedrückten Taste auf die entsprechende Auswerteleitung übertragen wird.

Die eine der beiden genannten Varianten betrifft eine Tastaturmatrize, bei der jede Matrixleitung für einen bestimmten Einsatzzweck vorgesehen ist. So werden beispielsweise die Leitungen in X-Richtung als Steuerleitungen und die Leitungen in Y-Richtung als Auswerteleitungen verwendet.

Bei der zweiten Variante ist die Anzahl der Matrixleitungen minimiert. Dabei wird die Anzahl der Kreuzungspunkte der verwendeten Leitungen und damit der möglichen Tasten dadurch maximiert, daß jede Leitung jede andere einmal kreuzt. Dazu ist es erforderlich, jede Leitung sowohl als Steuerleitung als auch als Auswerteleitung zu verwenden. Die Matrix wird dadurch abgefragt, daß nacheinander stets eine Leitung als Steuerleitung und die übrigen Leitungen als Auswerteleitungen verwendet werden.

Aus EP-A-368 520 ist eine Eingabetastatur bekannt, deren Zeilen- und Spaltenleiter an ihren Kreuzungspunkten durch Tasten koppelbar sind. Die Leiter sind mittels eines mit Spannungsquellen zusammenwirkenden Bitmustergenerators mit einer idealen oder mit einer belastungsabhängigen Spannung beaufschlagbar. Die Zeilenleitungen sind mit EXCLUSIV-ODER-Gliedern gekoppelt, die einem Soll-/Istwert-Vergleich der Spannung auf diesen Zeilenleitungen vornehmen. Es sind dazu stets mindestens drei Spaltenleitungen mit der belastungsabhängigen Spannung beaufschlagt.

Es ist Aufgabe der Erfindung, die Sicherheit entsprechender Eingabegeräte auch beim Einsatz erheblicher krimineller Energie noch weiter zu steigern. Insbesondere soll die Betätigung von Tasten nicht mehr unmittelbar erkannt werden können und ein Ermitteln der betätigten Taste auch mit großem technischem Aufwand nicht möglich sein. Vorzugsweise soll dabei eine Lösung angegeben werden, die gegenüber dem bekannten Tastatureingabegerät eine kostengünstigere Ausführung erlaubt.

Diese Aufgabe wird durch die in den Ansprüchen 1, 8 und 12 angegebenen Merkmale gelöst.

Im Unterschied zum Stand der Technik wird, egal welche Matrixvariante gewählt wird, jeder Matrixleiter sowohl als Steuerals auch als Auswerteleiter verwendet. Jede Steuerleitung, die mit dem Sollwert einer belastungsabhängigen Quelle beaufschlagt ist, wird zusätzlich als Auswerteleitung eingesetzt. Die übrigen Leiter sind mit dem Wert einer idealen Quelle beaufschlagt. Der Wert einer idealen Quelle ändert sich nicht. Eine Quelle gibt z.B. elektrischen Strom oder Licht ab. Die ideale Quelle dominiert dabei die belastungsabhängige Quelle derart, daß bei einer Verbindung beider Quellenausgänge der Quellenausgang der belastungsabhängigen Quelle den Wert der idealen Quelle annimmt. Beispielsweise wird der Ausgang einer belastungsabhängigen Spannungsquelle bei Verbindung mit einer idealen Spannungsquelle den Spannungspegel der idealen Spannungsquelle annehmen, oder der Ausgang einer dunklen Lichtquelle wird durch Verbindung mit dem Ausgang einer hellen (idealen) Lichtquelle ebenfalls hell.

Gemäß der in den Ansprüchen 1 und 12 angegebenen Lösung wird jeweils nur ein Leiter mit dem Sollwert der belastungsabhängigen Quelle beaufschlagt. Im Falle einer gedrückten Taste sind demnach sämtliche Matrixleitungen mit dem Wert der idealen Quelle beaufschlagt. Damit ist es ausschließlich der Steuer- und Auswerteschaltung möglich, zu erkennen, daß eine Taste gedrückt ist. Da alle Matrixleitungen gleiches Potential aufweisen, ist von außen nicht erkennbar, ob eine Matrixleitung und/oder welche Matrixleitung gerade überprüft wird.

Hat die Steuer- und Auswerteschaltung zwei Leiter ermittelt, deren Istwert nicht dem Sollwert, sondern dem Wert der idealen Quelle entspricht, dann hat sie eine betätigte Taste eindeutig ermittelt.

Um die Sicherheit noch weiter zu erhöhen, ist gemäß einer weiteren Weiterbildung der Erfindung vorgesehen, daß nach Erkennen zweier, dem Wert der idealen Quelle in etwa entsprechender Istwerte auf zwei unterschiedlichen Leitern mindestens einer dieser Leiter mindestens einmal mit dem Sollwert der belastungsabhängigen Quelle beaufschlagt und der Istwert auf Gleichheit überprüft wird, und daß die übrigen Leiter in unregelmäßigen Zeitabständen nacheinander mit dem Sollwert der belastungsabhängigen Quelle beaufschlagt werden. Durch dieses Verfahren wird vorgetäuscht, daß auf jeder Matrixleitung mindestens eine Taste gedrückt war und wieder losgelassen wird, wobei im Extremfall sämtliche Tasten gedrückt und wieder losgelassen werden. Irgendwann innerhalb dieses Zeitintervalls wird auch die tatsächliche Tastenbetätigung beendet. Dies hat zur Folge, daß auch die dieser Taste zugehörigen Matrixleiter mit dem Sollwert der belastungsabhängigen Quelle beaufschlagt werden. Es ist also von außen nicht erkennbar, wann welche Tastenbetätigung beendet wird. Nachdem sämtliche Tasten wieder losgelassen sind, werden die Matrixleitungen erneut einzeln und in beliebiger Folge nach dem erfindungsgemäßen Verfahren abgefragt.

Gemäß der im Anspruch 8 angegebenen Lösung wird ein Soll-Bitmuster an die Gesamtheit der Leiter in Form einer Verbindung der einzelnen Leiter mit je einer idealen oder belastungsabhängigen Quelle von der Steuerschaltung angelegt. Die Auswerteschaltung vergleicht ein tatsächlich vorhandenes Ist-Bitmuster mit dem Soll-Bitmuster und wertet diesen Vergleich zum Erkennen einer eventuell gedrückten Taste aus. Es ist dabei von außen nicht erkennbar, ob das von außen meßbare Ist-Bitmuster dem Soll-Bitmuster entspricht oder nicht. Einen eventuellen Unterschied kann nur die Auswerteschaltung erkennen und nur sie kann daraus Rückschlüsse auf eine betätigte Taste ziehen.

Gemäß einer weiteren Ausgestaltung und Weiterbildung der Erfindung bestimmt die Steuerschaltung das Soll-Bitmuster in Abhängigkeit von einer Zufallsgröße. Diese Zufallsgröße kann unmittelbar eine aktuell generierte Zufallszahl mit einer der Anzahl der Leiter entsprechenden Anzahl von Stellen sein, aber auch ein rotierender Zeiger, der zu einem zufälligen Zeitpunkt angehalten wird und dabei auf eines von vielen vorher gespeicherten Soll-Bitmustern zeigt. Für die Dauer eines Abfragezyklus ist durch Speichern bzw. Markieren der bereits abgefragten Soll-Bitmuster sichergestellt, daß jedes Soll-Bitmuster innerhalb eines Abfragezyklus nur einmal an die Leitermatrix angelegt wird. Damit ist eine zielbewußte und schnelle Abfrage der Leitermatrix gewährleistet.

Gemäß einer weiteren Weiterbildung und Ausgestaltung der Erfindung wird nach Erkennen einer gedrückten Taste durch Anlegen geeigneter Soll-Bitmuster eine Mehrzahl von gedrückten Tasten simuliert. Diese simultan gedrückten Tasten werden in beliebiger, durch einen Zufallsparameter bestimmten Folge scheinbar wieder losgelassen. Während dieser Zeit werden auch jene Leiter überwacht, an denen die betätigte Taste erkannt worden war. Erst nachdem alle einmal simultan oder tatsächlich gedrückten Tasten wieder losgelassen wurden, wird der Abfragezyklus beendet.

Gemäß einer weiteren Weiterbildung der Erfindung wird ein folgender Abfragezyklus nach einer Zeit gestartet, die durch einen sich häufig ändernden Zufallsparameter bestimmt wird. Damit ist sichergestellt, daß eine Synchronisation auf den jeweiligen Beginn eines Abfragezyklus von außen nicht möglich ist.

Weitere vorteilhafte Ausgestaltungen und Weiterbildungen des erfindungsgemäßen Verfahrens, sowie Ausgestaltungen eines Tastatureingabegerätes zur Durchführung des Verfahrens und eine vorteilhafte Verwendung sind in den Unteransprüchen angegeben.

Im folgenden wird ein Ausführungsbeispiel der Erfindung anhand der Zeichnung näher erläutert. Dabei zeigen
FIG 1 eine Leitermatrix, die mit einer Steuer- und Auswerteeinheit verbunden ist,
FIG 2 die Prinzipdarstellung eines Leiteranschlusses der Steuer- und Auswerteschaltung, und
FIG 3 einen Ausschnitt aus der Leitermatrix mit Impulsdiagramm.

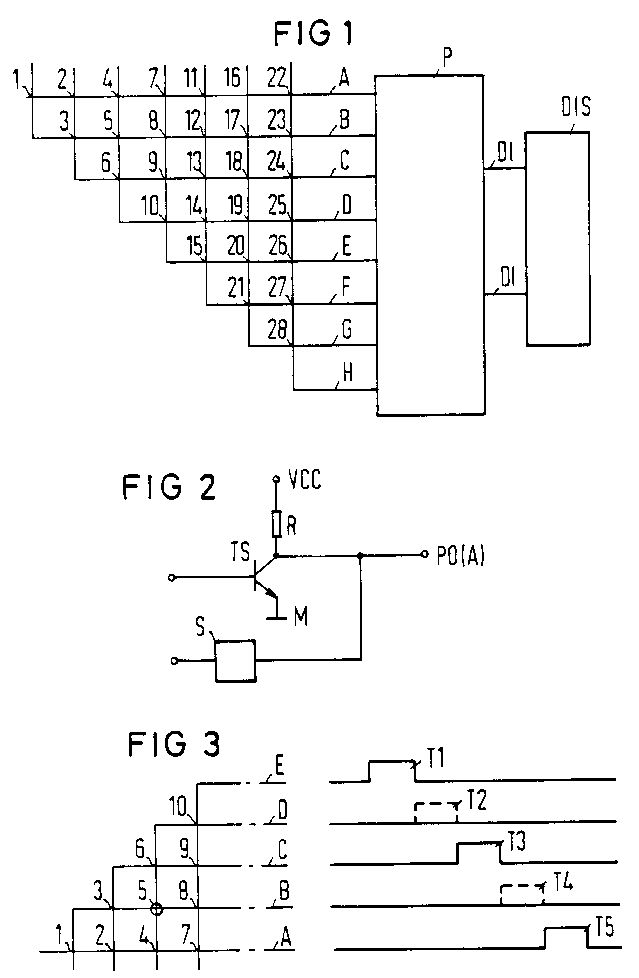

FIG 1 zeigt eine Leitermatrix, die aus acht Einzelleitern A bis H aufgebaut ist. Nach der Beziehung (n(n-1))/2, mit n=8, ergeben sich 28 Kreuzungspunkte, die mit 1..28 bezeichnet sind. Diese Matrixleiter A bis H sind auf einen 8-Bit breiten Port PO eines Mikroprozessors P gelegt. Der Mikroprozessor P dient als Steuer- und Auswerteschaltung und ist zusätzlich über Leitungen DI mit einem Display DIS verbunden.

FIG 2 zeigt in Prinzipdarstellung einen Leiteranschluß der Steuer- und Auswerteschaltung. Es handelt sich dabei beispielsweise um den Portpin PO(A) des Prozessors P, an den der Leiter A angeschlossen ist. Der Leiteranschluß erfüllt zwei Funktionen:
1. Er übernimmt die Treiberfunktion der Steuerschaltung und
2. Er übernimmt die Eingangsfunktion für die Auswerteschaltung.

Der Treiberteil besteht aus einem Transistor TS in Emitterschaltung, dessen Emitter an Masse M geklemmt ist, und dessen Kollektor über einen Widerstand R mit einer Versorgungsspannung VCC verbunden ist. Der Kollektoranschluß des Transistors TS bildet den Portausgang PO(A). Der Auswerteteil besteht aus einem Sensor S, z.B. einem Spannungsmesser, der die am Portpin PO(A) vorliegende Spannung mißt und anschließend die gemessene Größe an die Auswerteschaltung weiterreicht. Mit Hilfe der dargestellten Treiberschaltung läßt sich sowohl eine ideale Quelle, als auch eine belastungsabhängige Quelle realisieren. Sperrt der Transistor TS, dann liegt an seinem Kollektor bei unbelastetem Portausgang PO(A) der Sollspannungswert VCC an. Wird der Portpin PO(A) belastet, verändert sich das an ihm liegende Spannungspotential entsprechend dem Spannungsabfall am Widerstand R. Bei offenem Transistor TS liegt am Portpin PO(A) Massepotential an. Dieses Massepotential ist, abgesehen von den Transistorverlusten, belastungsunabhängig und entspricht einer idealen Quelle.

FIG 3 zeigt einen Ausschnitt aus der Leitermatrix. Es sind lediglich die Leiter A bis E und die dazugehörigen Kreuzungspunkte 1 bis 10 dargestellt. Der Kreuzungspunkt 5 ist durch einen Kreis markiert. Diese Markierung symbolisiert eine gedrückte Taste. Neben jedem Leiter ist ein Impulsverlauf dargestellt, der fünf Zeitintervalle T1 bis T5 umfaßt. Der Grundpegel auf den Leitungen A bis E ist Low, das heißt gemäß FIG 2, daß der Transistor TS durchgeschaltet ist und die Leiter A bis E mit Masse M verbunden sind. Im Zeitintervall T1 wird ein Transistor TS gesperrt. Der Leiter E erhält High-Potential, das heißt, über den Widerstand R liegt am Leiter E die Spannung VCC. Im Zeitintervall T2 wird der Transistor am Portpin PO(D) gesperrt. Da die Leitung D im Kreuzungspunkt 5 jedoch durch einen Tastendruck mit der Leitung B verbunden ist, und die Leitung B über den Portpin PO(B) und dessen Transistor TS mit Masse M verbunden ist, bleibt auf Leitung D das Low-Potential bestehen. Im Zeitintervall T3 sperrt der Transistor TS des Portpins PO(C), wodurch an der Leitung C High-Potential vorliegt. Im Zeitintervall T4 sperrt der Transistor TS des Portpins PO(B). Am Leiter B liegt dennoch Low-Potential vor, da er am Kreuzugspunkt 5 durch einen Tastendruck mit dem Leiter D verbunden ist. Der Leiter D liegt im Zeitintervall T4 an Massepotential (entspricht Low-Potential). Im Zeitintervall T5 sperrt der Transistor TS, dessen Kollektor den Portpins PO(A) bildet. Der Leiter A wird mit der Spannung VCC beaufschlagt. In jedem Zeitintervall T1 bis T5 überprüft die Auswerteschaltung mindestens einmal über den jeweils zugehörigen Sensor S den Ist-Spannungswert des jeweiligen Leiters A bis E. Da Istwert und Sollwert bei den Leitern B bzw. D während der Zeitintervalle T4 bzw.T2 nicht übereinstimmen, erkennt die Auswerteschaltung, daß die Taste am Kreuzungspunkt 5 der Leitermatrix gedrückt ist. Für den externen Beobachter ist jedoch nur zu erkennen, daß die Leiter A, C und E überprüft worden sind, da nur auf diesen Leitern positive Impulse meßbar sind. Nicht vorhandene positive Impulse führen erfindungsgemäß deshalb nicht zu einer Enttarnung der gedrückten Taste, weil nicht, wie in FIG 3 der Einfachheit halber dargestellt ist, im Zeitintervall T1 der Leiter E, im Zeitintervall T2 der Leiter D, im Zeitintervall T3 der Leiter C, im Zeitintervall T4 der Leiter B und im Zeitintervall T5 der Leiter A geprüft werden, sondern weil es auf Grund einer zufälligen Auswahl eines der Leiter A bis E zu jedem der Zeitintervalle T1 bis T5 gar nicht möglich ist, festzustellen, ob einer dieser Leiter überhaupt abgefragt wird.

Die Sicherheit der Verschleierung wird zudem dadurch erhöht, daß beispielsweise anstelle der in FIG 1 dargestellten 28 Tasten nur 21 Tasten benötigt werden und dennoch acht Leiter A bis H zur Verfügung stehen. Damit steht ein imaginärer Leiter A bis H zur Verfügung, der wie ein tatsächlich vorhandener Leiter in den Abfragezyklus integriert werden kann.

Um sicherzustellen, daß bei jedem Abfragezyklus auch alle Leiter A bis H abgefragt werden, ist eine der Anzahl der vorhandenen Leiter A bis H angepaßte Anzahl von Merkern vorgesehen, die den einzelnen Leitern zugeordnet sind, und nach erfolgter Abfrage eines Leiters A bis H gesetzt werden. Für diesen Zweck kann beispielsweise eine ein Byte breite Speicherstelle innerhalb des Prozessors P verwendet werden. Jedes Bit ist einem Leiter A bis H zugeordnet. Nach Abfrage des Leiters D wird das dem Leiter D zugehörige Bit gesetzt, nach Abfrage des Leiters F wird dessen zugehöriges Bit gesetzt usw., bis das letzte Bit gesetzt wird. Das Setzen des letzten Bit löst das Rücksetzen des Byte aus. Alle Bit werden rückgesetzt, ein neuer Abfragezyklus kann beginnen.

Der jeweils abzufragende Leiter A bis H wird durch eine prozessorintern erzeugte Zufallszahl bestimmt. Dabei kann es vorkommen, daß ein bereits abgefragter Leiter zu einem späteren Zeitintervall T2 bis T5 nochmals zur Abfrage ausgewählt wird. Für diesen Fall ist eine Routine vorgesehen, die den in einer vorgegebenen Reihenfolge nächsten Leiter mit nicht gesetztem Merker auswählt. Ist beispielsweise der vorher bereits abgefragte Leiter D nochmals zur Abfrage ausgewählt und der daneben liegende Leiter E noch nicht abgefragt worden, so bewirkt die Routine, daß anstelle des Leiters D der Leiter E abgefragt wird.

Zur Simulation einer betätigten Taste werden vor Beginn eines Abfragezyklus die Merker-Bit für zwei Leiter A bis H gesetzt. Diese Leiter werden innerhalb dieses Zyklus und bei entsprechender Programmierung auch während einiger Folgezyklen nicht abgefragt. Der ausbleibende Pegelwechsel auf diesen Leitern simuliert eine gedrückte Taste. Diese Simulation kann noch dadurch verstärkt werden, daß das Setzen der Merker vor Abfrage des ersten Leiters auf das Display DIS reflektiert wird. Diese Reflexion erfolgt beispielsweise dadurch, daß ein Sternsymbol "*" auf dem Display DIS angezeigt wird.

Um eine Synchronisation auf den jeweiligen Beginn eines Abfragezyklus unmöglich zu machen, sind die Zeiten, die zwischen einem Zyklus und einem folgenden Zyklus vergehen, in denen jeweils sämtliche Leiter abgefragt werden, durch einen sich häufig ändernden Zufallsparameter bestimmt.

Tritt nun eine tatsächlich betätigte Taste auf, wird die Strategie zur Verschleierung geändert. Es werden nur noch die beiden Leiter A bis H abgefragt, über die die betätigte Taste erkannt wurde. In beliebiger Folge und in zufälligen Zeitabständen wird nun das Loslassen einzelner Tasten simuliert. Dies geschieht dadurch, daß für ein Zeitintervall T1..T5 High-Potential auf eine Leitung A bis H gelegt wird. Irgendwann während dieser Simulation wird die betätigte Taste tatsächlich losgelassen und auch auf deren zugehörigen Leitern A bis H erscheint zu unterschiedlichen Zeiten High-Potential. Das Loslassen von Tasten wird solange weiter simuliert, bis auf jeder Leitung einmal ein High-Potential vorhanden war, oder jede Taste einmal losgelassen worden ist. Die Gesamtdauer der Simulation kann beispielsweise einen Zeitraum von 200 msec umfassen, da erfahrungsgemäß eine tatsächlich gedrückte Taste etwa 50 msec betätigt bleibt.

Die Realisierung der Steuer- und Auswerteschaltung mit Hilfe eines Mikroprozessors P gewährleistet, daß es einem Angreifer unmöglich ist, während des Betriebs Messungen im Prozessor P vorzunehmen, die zu einer Enttarnung der Verschleierung führen könnten. Des weiteren bietet ein Mikroprozessor P die Gewähr, daß die Algorithmen, mit denen die Verfahren zur Verschleierung gesteuert werden, nicht ermittelt werden können. Auch Parameter, die einen bestimmten Ablauf der Verschleierungsalgorithmen bewirken, können innerhalb des Prozessors P in nicht auslesbaren Sicherheitsbereichen gespeichert werden. Solche Parameter sind z.B. Zufallszahlen, die sich von Tastatureingabegerät zu Tastatureingabegerät unterscheiden. Die Verwendung eines n-Bit breiten Port des Prozessorchip als Verbindungsglied zu den Leitern der Leitermatrix ermöglicht besonders kurze Abfragezeiten.

Insgesamt bewirkt die erfindungsgemäße Verschleierung der Tastenbetätigung sinngemäß eine unmittelbare Verschlüsselung der Eingabedaten. Den jeweiligen Schlüssel liefert dazu die gedrückte Taste selbst, d.h. der tatsächlich vorhandene, an einen Leiter anliegende Istwert, ist von einer eventuell gedrückten Taste abhängig.

## Patentansprüche

1. Verfahren zur Verschleierung einer Eingabe bei einem Tastatureingabegerät für sicherheitsrelevante Daten, unter Verwendung einer Tastatur mit den Kreuzungspunkten (1-28) einer Leitermatrix zugeordneten Eingabetasten, die im gedrückten Zustand die sich kreuzenden Leiter (A-H) miteinander koppeln und einer mit den Leitern (A-H) verbundenen Steuer- und Auswerteschaltung (P),
**dadurch gekennzeichnet,**
daß in beliebiger Folge jeweils nur ein Leiter (A-H) mit dem Sollwert einer belastungsabhängigen Quelle (VCC, R) beaufschlagt wird, während alle übrigen Leiter (A-H) mit einem Wert einer idealen Quelle (M) beaufschlagt werden, und daß der Sollwert des mit dem Sollwert der belastungsabhängigen Quelle (VCC, R) beaufschlagten Leiters (A-H) mit dem Istwert auf Gleichheit überprüft wird.

2. Verfahren zur Verschleierung nach Anspruch 1,
dadurch gekennzeichnet,
daß zusätzlich zu den Leitern (A-H) der Leitermatrix auch mindestens ein imaginärer Leiter abgefragt wird.

3. Verfahren zur Verschleierung nach Anspruch 1 oder 2,
**dadurch gekennzeichnet,**
daß für jeden abgefragten Leiter (A-H) ein Merker gesetzt wird, und daß mit dem Setzen des letzten Merkers alle Merker in den Anfangszustand zurückgesetzt werden.

4. Verfahren zur Verschleierung nach Anspruch 3,
**dadurch gekennzeichet,**
daß jeder abzufragende Leiter (A-H) durch eine Zufallszahl bestimmt wird, und daß bei Bestimmung eines Leiters (A-H) mit bereits gesetztem Merker der in einer vorgegebenen Reihenfolge nächste Leiter (A-H) mit nicht gesetztem Merker abgefragt wird.

5. Verfahren zur Verschleierung nach Anspruch 3 oder 4,
**dadurch gekennzeichnet,**
daß bestimmt durch eine Zufallsgröße, bereits vor dem Abfragen des ersten Leiters (A-H) die Merker mindestens eines Leiterpaares gesetzt werden.

6. Verfahren zur Verschleierung nach Anspruch 5,
**dadurch gekennzeichnet,**
daß das Setzen der Merker vor Abfrage des ersten Leiters (A-H) auf ein Display (DIS) reflektiert wird.

7. Verfahren zur Verschleierung nach einem der vorhergehenden Ansprüche,
**dadurch gekennzeichnet,**
daß nach Erkennen zweier dem Wert der idealen Quelle (M) in etwa entsprechender Istwerte auf zwei unterschiedlichen Leitern (A-H), mindestens einer dieser Leiter (A-H) mindestens einmal mit dem Sollwert der belastungsabhängigen Quelle (VCC,R) beaufschlagt und der Istwert auf Gleichheit überprüft wird, und daß die übrigen Leiter (A-H) in unregelmäßigen Zeitabständen in zufälliger Folge nacheinander mit dem Sollwert der belastungsabhängigen Quelle (VCC,R) beaufschlagt werden.

8. Verfahren zur Verschleierung einer Eingabe bei einem Tastatureingabegerät für sicherheitsrelevante Daten, unter Verwendung einer Tastatur mit den Kreuzungspunkten (1-28) einer Leitermatrix zugeordneten Eingabetasten, die im gedrückten Zustand die sich kreuzenden Leiter (A-H) miteinander koppeln und einer mit den Leitern (A-H) verbundenen Steuer- und Auswerteschaltung (P),
**dadurch gekennzeichnet,**
daß ein Soll-Bitmuster an die Gesamtheit der Leiter (A-H) in Form einer Verbindung der einzelnen Leiter (A-H) mit je einer idealen oder belastungsabhängigen Quelle (M,VCC,R) von der Steuerschaltung (P) angelegt wird, daß der Sollwert der mit dem Sollwert der belastungsabhängigen Quelle (VCC, R) beaufschlagten Leiter (A-H) mit deren Istwert auf Gleichheit überprüft werden, und daß von der Auswerteschaltung(P) ein tatsächlich vorhandenes Ist-Bitmuster durch Vergleich mit dem Soll-Bitmuster ausgewertet wird.

9. Verfahren zur Verschleierung nach Anspruch 8,
**dadurch gekennzeichnet,**
daß die Steuerschaltung (P) das Soll-Bitmuster in Abhängigkeit von einer Zufallsgröße bestimmt, und daß durch Speicherung der angelegten Soll-Bitmuster für die Dauer eines Abfragezyklus sichergestellt wird, daß jedes Bitmuster innerhalb eines Abfragezyklus nur einmal angelegt wird.

10. Verfahren zur Verschleierung nach einem der Ansprüche 8 oder 9,
**dadurch gekennzeichnet,**
daß nach Erkennen einer gedrückten Taste durch Anlegen geeigneter Soll-Bitmuster eine Mehrzahl von gedrückten Tasten simuliert wird, und daß für sämtliche als gedrückt simulierte Tasten das Loslassen in beliebiger, durch einen Zufallsparameter bestimmter Folge simuliert wird.

11. Verfahren zur Verschleierung nach mindestens einem der Ansprüche,
**dadurch gekennzeichnet,**
daß die Zeit, die zwischen einem Abfragezyklus und einem folgenden Abfragezyklus vergeht, durch einen sich häufig ändernden Zufallsparameter bestimmt wird.

12. Tastatureingabegerät für sicherheitsrelevante Daten zur Durchführung des Verfahrens zur Verschleierung einer Eingabe, bestehend aus einer Tastatur mit den Kreuzungspunkten (1-28) einer Leitermatrix zugeordneten Eingabetasten, die im gedrückten Zustand die sich kreuzenden Leiter (A-H) miteinander koppeln und einer mit den Leitern (A-H) verbundenen Steuer- und Auswerteschaltung (P), mit deren Hilfe die Leiter (A-H) mit einem definierten Wert einer idealen Quelle (M) oder einem definierten Sollwert einer belastungsabhängigen Quelle (VCC, R) beaufschlagbar sind,
**dadurch gekennzeichnet,**
daß jeweils der Steuerleiter und der Auswerteleiter identisch sind, und daß stets nur einer der Leiter (A-H) mit dem Sollwert der belastungsabhängigen Quelle (VCC, R) beaufschlagbar ist, während die übrigen Leiter (A-H) mit dem definierten Wert der idealen Quelle (M) beaufschlagt sind.

13. Tastatureingabegerät nach Anspruch 12,
**dadurch gekennzeichnet,**
daß die Steuer- und Auswerteschaltung (P) auf einem Prozessorchip realisiert ist, und daß sämtliche Leiter (A-H) der Leitermatrix mit einem n-Bit breiten Port des Prozessorchips (P) verbunden sind.

14. Tastatureingabegerät nach einem der Ansprüche 12 oder 13,
**dadurch gekennzeichnet,**
daß das Tastatureingabegerät als Eingabegerät für Daten an Kreditkartenterminals, insbesondere für die Eingabe einer persönlcihen Identifikationsnummer (PIN) verwendet wird.

## Claims

1. Method for masking an input in the case of a keyboard input device for data which are apt for protection, using a keyboard having input keys which are assigned to the crossover points (1-28) of a conductor matrix and, in the pressed state, couple the crossed conductors (A-H) to one another and using a control and evaluation circuit (P) which is connected to the conductors (A-H), characterized in that, in any order, in each case only one conductor (A-H) receives the desired value of a load-dependent source (VCC, R), while all of the remaining conductors (A-H) receive a value of an ideal source (M), and in that the desired value of the conductor (A-H) which has received the desired value of the load-dependent source (VCC, R) is checked for correspondence to the actual value.

2. Method for masking according to Claim 1, characterized in that at least one imaginary conductor is also interrogated in addition to the conductors (A-H) of the conductor matrix.

3. Method for masking according to Claim 1 or 2, characterized in that a flag is set for each interrogated conductor (A-H), and in that once the last flag is set, all of the flags are reset to the initial state.

4. Method for masking according to Claim 3, characterized in that each conductor (A-H) to be interrogated is determined by a random number, and in that, if a conductor (A-H) having a flag which is already set is determined, the next conductor (A-H) in a predetermined order and having a flag which is not set is interrogated.

5. Method for masking according to Claim 3 or 4, characterized in that the flags of at least one conductor pair are set, this being determined by a random variable, even before the interrogation of the first conductor (A-H).

6. Method for masking according to Claim 5, characterized in that the setting of the flags prior to interrogation of the first conductor (A-H) is reflected on a display (DIS).

7. Method for masking according to one of the preceding claims, characterized in that, following identification of two actual values, which approximately correspond to the value of the ideal source (M), on two different conductors (A-H), at least one of these conductors (A-H) receives, at least once, the desired value of the load-dependent source (VCC, R) and the actual value is checked for correspondence, and in that the remaining conductors (A-H) successively receive the desired value of the load-dependent source (VCC, R) at irregular time intervals and in a random order.

8. Method for masking an input in the case of a keyboard input device for data which are apt for protection, using a keyboard having input keys which are assigned to the crossover points (1-28) of a conductor matrix and, in the pressed state, couple the crossed conductors (A-H) to one another and using a control and evaluation circuit (P) which is connected to the conductors (A-H), characterized in that a desired bit pattern is applied by the control circuit (P) to all of the conductors (A-H) in the form of a connection of the individual conductors (A-H) to one ideal or load-dependent source (M,VCC,R) each, in that the desired value of the conductors (A-H) which have received the desired value of the load-dependent source (VCC, R) is checked for correspondence with the actual value of the said conductors, and in that the evaluation circuit (P) evaluates an actual bit pattern which is actually present by means of a comparison with the desired bit pattern.

9. Method for masking according to Claim 8, characterized in that the control circuit (P) determines the desired bit pattern as a function of a random variable, and in that the storage of the applied desired bit pattern for the duration of an interrogation cycle ensures that each bit pattern is applied only once within an interrogation cycle.

10. Method for masking according to one of Claims 8 and 9, characterized in that, following identification of a pressed key, a plurality of pressed keys is simulated by applying suitable desired bit patterns, and in that the release is simulated, for all of the keys which are simulated as being pressed, in any order determined by a random parameter.

11. Method for masking according to at least-one of the preceding claims, characterized in that the time which elapses between one interrogation cycle and a following interrogation cycle is determined by a frequently changing random parameter.

12. Keyboard input device for data which are apt for protection, for carrying out the method for masking an input, comprising a keyboard having input keys which are assigned to the crossover points (1-28) of a conductor matrix and, in the pressed state, couple the crossed conductors (A-H) to one another, and comprising a control and evaluation circuit (P) which is connected to the conductors (A-H) and with the aid of which the conductors (A-H) can receive a defined value of an ideal source (M) or a defined desired value of a load-dependent source (VCC, R), characterized in that the control conductor and the evaluation conductor are in each case identical, and in that it is always only one of the conductors (A-H) which can receive the desired value of the load-dependent source (VCC, R), while the remaining conductors (A-H) receive the defined value of the ideal source (M).

13. Keyboard input device according to Claim 12, characterized in that the control and evaluation circuit (P) is implemented on a processor chip, and in that all the conductors (A-H) of the conductor matrix are connected to an n-bit-wide port of the processor chip (P).

14. Keyboard input device according to one of Claims 12 and 13, characterized in that the keyboard input device is used as an input device for data at credit card terminals, in particular for the input of a personal identification number (PIN).

## Revendications

1. Procédé de masquage d'une introduction dans un appareil d'introduction par clavier pour des données de sécurité, en utilisant un clavier comportant des touches d'introduction associées aux points (1 à 28) d'intersection d'une matrice de conducteurs, les touches d'introduction, quand on appuie sur elles, couplant l'un à l'autre les conducteurs (A à H) se croisant, et un circuit de commande et d'exploitation (P) relié aux conducteurs (A à H),
caractérisé en ce que
on ne met dans un ordre quelconque qu'un conducteur (A à H) à la valeur de consigne d'une source (VCC, R) qui dépend de la charge, tandis que l'on met tous les autres conducteurs (A à H) à une valeur d'une source (M) idéale et on contrôle l'égalité de la valeur de consigne du conducteur (A à H) mis à la valeur de consigne de la source (VCC, R) dépendant de la charge, et de la valeur réelle.

2. Procédé de masquage suivant la revendication 1, caractérisé en ce que l'on interroge, en plus des conducteurs (A à H) de la matrice de conducteurs, aussi au moins un conducteur imaginaire.

3. Procédé de masquage suivant la revendication 1 ou 2, caractérisé en ce que l'on positionne un repère pour chaque conducteur interrogé (A à H) et on remet tous les repères à l'état initial lorsque l'on positionne le dernier repère.

4. Procédé de masquage suivant la revendication 3, caractérisé en ce que chaque conducteur (A à H) à interroger est déterminé par un nombre aléatoire et, lorsque l'on a déterminé un conducteur (A à H) ayant un repère déjà positionné, on interroge le prochain, dans un ordre prescrit, conducteur (A à H) dont le repère n'est pas positionné.

5. Procédé de masquage suivant la revendication 3 ou 4, caractérisé en ce que l'on positionne les repères d'au moins une paire de conducteurs de manière déterminée par une grandeur aléatoire, déjà avant d'interroger le premier conducteur (A à H).

6. Procédé de masquage suivant la revendication 5, caractérisé en ce que l'on reproduit le positionnement des repères avant l'interrogation du premier conducteur (A à H) sur un écran (DIS).

7. Procédé de masquage suivant l'une des revendications précédentes, caractérisé en ce que, après avoir trouvé deux valeurs réelles correspondant à peu près à la valeur de la source idéale (M) sur deux conducteurs différents (A à H), on met au moins l'un de ces conducteurs (A à H) au moins une fois à la valeur de consigne de la source (VCC, R) dépendant de la charge, on contrôle l'égalité à la valeur réelle et on met les autres conducteurs (A à H) à des intervalles de temps irréguliers dans un ordre aléatoire les uns après les autres à la valeur de consigne de la source (VCC, R) dépendant de la charge.

8. Procédé de masquage d'une introduction dans un appareil d'introduction par clavier pour des données de sécurité, en utilisant un clavier comportant des touches d'introduction associées aux points (1 à 28) d'intersection d'une matrice de conducteurs, les touches d'introduction, quand on appuie sur elles, couplant l'un à l'autre les conducteurs (A à H) se croisant, et en utilisant un circuit de commande et d'exploitation (P) relié aux conducteurs (A à H),
caractérisé en ce que
on applique un motif binaire de consigne à la totalité des conducteurs (A à H) sous forme d'une liaison des divers conducteurs (A à H) chacun à une source (M, VCC, R) idéale ou dépendant de la charge par le circuit (P) de commande, on vérifie l'égalité de la valeur de consigne des conducteurs (A à H) soumis à la valeur de consigne de la source (VCC, R) dépendant de la charge, et de leur valeur réelle et on exploite par le circuit (P) d'exploitation un motif binaire réel effectivement présent par comparaison au motif binaire de consigne.

9. Procédé de masquage suivant la revendication 8, caractérisé en ce que le circuit (P) de commande détermine le motif binaire de consigne en fonction d'une grandeur aléatoire et on est garanti par mémorisation du motif binaire de consigne appliqué pour la durée d'un cycle d'interrogation que l'on n'a appliqué qu'une fois chaque motif binaire pendant un cycle d'interrogation.

10. Procédé de masquage suivant l'une des revendications 8 ou 9, caractérisé en ce que l'on simule, après avoir reconnu qu'il a été appuyé sur une touche, en appliquant des motifs binaires de consigne appropriés l'appui d'une pluralité de touches et on simule pour toutes les touches dont on simule l'appui, le relâchement dans un ordre quelconque déterminé par un paramètre aléatoire.

11. Procédé de masquage suivant au moins l'une des revendications précédentes, caractérisé en ce que le temps qui s'écoule entre un cycle d'interrogation et un cycle d'interrogation suivant est déterminé par un paramètre aléatoire variant souvent.

12. Appareil d'introduction par clavier pour des données de sécurité destiné à mettre en oeuvre le procédé de masquage d'une introduction, constitué d'un clavier comportant des touches d'introduction associées aux points (1 à 28) d'intersection d'une matrice de conducteurs, ces touches d'introduction couplant, lorsqu'on appuie sur elles, l'un à l'autre les conducteurs (A à H) se croisant, et constitué d'un circuit (P) de commande et d'exploitation relié aux conducteurs (A à H), à l'aide duquel les conducteurs (A à H) peuvent être mis à une valeur définie d'une source (M) idéale ou à une valeur de consigne définie d'une source (VCC, R) dépendant de la charge,
caractérisé en ce que
le conducteur de commande et le conducteur d'exploitation sont identiques et toujours un seul des conducteurs (A à H) peut être mis à la valeur de consigne de la source (VCC, R) dépendant de la charge, tandis que les autres conducteurs (A à H) sont mis à la valeur définie de la source idéale (M).

13. Appareil d'introduction par clavier suivant la revendication 12, caractérisé en ce que le circuit (P) de commande et d'exploitation se trouve sur une puce de processeur et que tous les conducteurs (A à H) de la matrice de conducteurs sont reliés à un accès de n bits de large de la puce (P) de processeur.

14. Appareil d'introduction par clavier suivant l'une des revendications 12 ou 13, caractérisé en ce que l'appareil d'introduction par clavier est utilisé comme appareil d'introduction de données dans des terminaux à cartes de crédit, notamment pour l'introduction d'un numéro d'identification personnelle (PIN).
